# EUROPÄISCHE PATENTANMELDUNG

(11) **EP 2 835 341 A1**
(43) Veröffentlichungstag der Anmeldung: **11.02.2015**
(21) Anmeldenummer: 13179239.2
(22) Anmeldetag: 05.08.2013
(51) Int. Cl.: C01B 3/02, C01B 3/04, C01B 3/22

(54) **Verfahren zur Gewinnung von gasförmigem Wasserstoff**

(71) Anmelder: VTU Holding GmbH, 8074 Grambach (AT)
(72) Erfinder: Kalb, Roland, 8261 Sinabelkirchen (AT); Koncar, Michael, 8501 Lieboch (AT)
(74) Vertreter: Schwarz & Partner

(57) **Zusammenfassung**

Verfahren zur Gewinnung von Wasserstoff in gasförmiger Form durch Freisetzen von Wasserstoff aus einem flüssigen Medium, welches Wasserstoff chemisch gebunden enthält, dadurch gekennzeichnet, daß die Freisetzung unter einem Druck von mindestens 25 bar vorgenommen wird, wobei als flüssiges Medium bevorzugt eine ionische Flüssigkeit eingesetzt wird.

## Beschreibung

Die Erfindung betrifft ein Verfahren zur Gewinnung von Wasserstoff in gasförmiger Form durch Freisetzen von Wasserstoff aus einem flüssigen Medium, welches Wasserstoff chemisch oder physikalisch gebunden enthält.

Die Verwendung von Wasserstoff als Energieträger und die Umsetzung von Wasserstoff zu elektrischer Energie in Brennstoffzellen hat sehr viel Zukunft. Die Umsetzung dieser Technologien ist aber nur dann sinnvoll, wenn Wasserstoff in entsprechend hoher Dichte gespeichert werden kann. Zu diesem Zweck wird derzeit der Wasserstoff unter hohem Druck in entsprechenden Drucktanks gespeichert. Dabei wird Wasserstoffgas mittels konventioneller Kolbenkompressoren oder mittels Ionenverdichter (ein Verdichtertyp mit flüssigen Kolben basierend auf ionischen Flüssigkeiten; Linde AG, WO2006/120145A1 und WO2008/031527A1) auf bis zu 750 bar und höher verdichtet. Dazu ist ein erheblicher technischer Aufwand nötig und die Energiekosten für die Verdichtung sind entsprechend hoch. Wenn es gelingt, den Wasserstoff in flüssiger Form zu verdichten, könnte enorm viel Verdichtungsarbeit eingespart werden. Derartige flüssige Verdichtungen werden nach dem Stand der Technik auch durchgeführt. Dazu wird Wasserstoff wieder unter großen Energieaufwand auf -253°C gekühlt und verflüssigt und bei diesen tiefen Temperaturen als Flüssigkeit auf Druck gebracht.

Proionic GmbH hat flüssige Wasserstoffspeicher auf Basis ionischer Flüssigkeiten entwickelt und die Herstellung und Anwendung derartiger Wasserstoffspeicher zum Patent angemeldet (EP12153677.5 und WO2010/081657) Diese Speichermedien arbeiten so, dass Wasserstoff chemisch in einer ionischen Flüssigkeit gebunden wird. Als Beispiel können Trioctylmethylammonium-BH₄ oder Trimethylisopropylammonium-BH₄ genannt werden, weitere Verbindungen können beispielhaft den oben genannten Patentanmeldungen entnommen werden.

Die Freisetzung von Wasserstoffgas aus diesen flüssigen Wasserstoffspeichern nach den oben genannten Patentanmeldungen basiert auf der Reaktion des quaternären Borhydrids mit einem Katalysator, beispielsweise mit einem Übergangsmetallkatalysator wie z.B. Platin 1% auf Aluminiumoxid (z.B. Sigma-Aldrich 232114), wobei das entsprechende quaternäre Metaborat BO₂- entsteht. Diese Freisetzung wurde bisher bei Umgebungsdruck und bei Drücken bis zu fünf bar untersucht. Da Freisetzungen von Gasen aus Flüssigkeiten grundsätzlich bevorzugt bei tieferen Drücken ablaufen, wurden bis dato keine Versuche bei den genannten hohen Drücken durchgeführt.

Die vorliegende Erfindung besteht nun insbesondere darin, Wasserstoff bei niederigem Druck (0 - 50 bar) in Flüssigkeiten chemisch oder physikalisch gebunden zu speichern, die so erhaltene Flüssigkeit mit dem darin enthaltenen Wasserstoff auf einen höheren Druck zu bringen (25 - 1000 bar) und den Wasserstoff bei diesem höheren Druck wieder frei zu setzten. Die Kompression von Wasserstoff kann dadurch viel energieeffizienter durchgeführt werden. Solche flüssigen Wasserstoffspeicher können z.B. Carbazole, Fluorene, Methylcyclohexan, Aminoborane, Alkohole, Carbonsäuren, Lösungen von Metall-/Halbmetallhydriden oder Metall-/Halbmetallhydridsalzen oder ionische Flüssigkeiten oder Lösungen von ionischen Flüssigkeiten sein.

Die vorliegende Erfindung betrifft somit ein Verfahren zur Gewinnung von Wasserstoff in gasförmiger Form durch Freisetzen von Wasserstoff aus einem flüssigen Medium, welches Wasserstoff chemisch oder physikalisch gebunden enthält, das dadurch gekennzeichnet ist, daß die Freisetzung unter einem Druck von mindestens 25 bar, bevorzugt mindestens 100 bar, 300 bar, 600 bar oder 700 bar, vorgenommen wird.

Als flüssiges Medium können bevorzugt eingesetzt werden: organische Verbindungen wie Perhydrocarbazole, Perhydrofluorene, 2-Methylthiophene oder Toluol (entladene Formen) bzw. deren aushydrierte, mit Wasserstoff beladene Formen wie Carbazole, Fluorene, Pentan-1-thiole oder Methylcyclohexan, Aminoborane, Alkohole, Carbonsäuren, Lösungen von Metall-/Halbmetallhydriden oder Metall-/Halbmetallhydridsalzen.

Als flüssiges Medium können bevorzugt eingesetzt werden: Lösungen aller im Absatz zuvor genannten Substanzen in ionischen Flüssigkeiten.

Als flüssiges Medium können bevorzugt eingesetzt werden: Ionische Flüssigkeiten oder Lösungen von ionischen Flüssigkeiten. Das Anion der ionischen Flüssigkeit ist bevorzugt ein Metall-/Halbmetallhydrid, insbesondere ein Borhydrid (BH₄⁻) oder oder ein Triborhydrid (B₃H₈⁻) ein Aluminiumhydrid (AlH₄⁻) oder Alumoborhydrid Al(BH₄)₄⁻.

Eine bevorzugte Variante des erfindungsgemäßen Verfahrens ist **dadurch gekennzeichnet, dass** die Freisetzung des Wasserstoffs unter Anwendung eines Katalysator erfolgt, wobei der Katalysator am besten aus der Gruppe der Übergangsmetall- oder Edelmetallkatalysatoren stammt.

Die Erfindung betrifft ferner ein Verfahren, das dadurch gekennzeichnet ist, dass das flüssige Medium, in dem der Wasserstoff chemisch oder physikalisch gebunden ist, mit Hilfe einer Druckerhöhungseinrichtung auf einen Druck über 25 bar gebracht wird, und der Wasserstoff bei einem Druck über 25 bar aus dem flüssige Medium freigesetzt wird, und der so freigesetzte Wasserstoff einem Speicher oder einer Anwendung zugeführt wird.

Die Druckerhöhungseinrichtung ist insbesondere eine Pumpe.

Mit dem folgenden Beispiel wird die Erfindung noch näher erläutert.

### Beispiel

In einer Hochdruckzelle mit Schauglas soll gezeigt werden, dass Wasserstoff aus quaternären Borhydriden auch unter hohem Druck freigesetzt werden kann.

Eine auf ca. 45°C thermostatisierte Hochdruckzelle mit ca. 2,5cm großem Saphirschauglas, digitaler Videokamera, hydraulischer Druckaufprägung und digitalem Manometer (Auflösung 0,1 Bar) wurde mit ca. 40-50 ml des ionischen Wasserstoffspeichers Trimethylisopropylammoniumborhydrid 40%ig in Wasser beschickt und mit 1,1g Pt/Aluminiumoxid Katalysatorgranulat Sigma-Aldrich 232114 (Granulien zylinderförmig; ca. 2mm Durchmesser, 2,5mm Länge) versehen. Der Versuchsaufbau wurde hermetisch verschlossen. Es wurde sofort sehr viel Wasserstoff freigesetzt und der Druck stieg an. Sodann wurde Druck durch das hydraulische System aufgeprägt und die Entwicklung von Wasserstoffgasbläschen bzw. Druckanstieg beobachtet und dokumentiert.

P = 25 Bar: Beobachtbare heftige Gasentwicklung, Druckanstieg

P = 147 Bar: Beobachtbare heftige Gasentwicklung, Gasbläschen sind bereits sichtbar kleiner (hoher Druck!), gleichbleibender Druckanstieg von ca.1bar/min

P = 255 Bar: Beobachtbare Gasentwicklung, Gasbläschen werden noch kleiner, gleichbleibender Druckanstieg von ca. 1bar/min

P = 510 Bar: Beobachtbare Gasentwicklung, Gasbläschen werden noch kleiner, gleichbleibender Druckanstieg von ca.1bar/min; es wurde der Rührer kurz eingeschaltet, um die Gasbläschen von der Katalysatoroberfläche zu entfernen; nach Stillstand des Rührers entstehen wieder neue Gasbläschen auf der Katalysatoroberfläche. Die Hochdruckzelle versucht den eingestellten Druck aufrecht zu erhalten und regelt bei einem Delta von ca. 10bar (bei 520 Bar) nach = der Hydraulikzylinder fährt herraus = es muß sich das Volumen in der Zelle vergrößern, was der H2-Gasentwicklung entspricht.

P = 521 Bar: Gasentwicklung mit sehr kleinen Gasbläschen (Volumen Bläschen ca. 1/500 im Vergleich zu Normaldruck)

P = 647 Bar: Gasentwicklung mit sehr kleinen Gasbläschen

P = 650 Bar: Gasentwicklung, Druckanstieg

P = 706 Bar: Gasentwicklung mit sehr kleinen Gasbläschen, Druckanstieg

P = 708 Bar: Bilder 8 und 9, Gasentwicklung, Druckanstieg

Die Freisetzung von Wasserstoffgas aus ionischen Flüssigkeiten mit BH₄-Anionen nach EP12153677.5 und WO2010/081657 mit einem Pt-Aluminiumoxidkatalysator findet selbst bei 700 bar statt.

## Patentansprüche

1. Verfahren zur Gewinnung von Wasserstoff in gasförmiger Form durch Freisetzen von Wasserstoff aus einem flüssigen Medium, welches Wasserstoff chemisch oder physikalisch gebunden enthält, **dadurch gekennzeichnet, daß** die Freisetzung unter einem Druck von mindestens 25 bar vorgenommen wird.

2. Verfahren nach Anspruch 1, **dadurch gekennzeichnet, daß** die Freisetzung unter einem Druck von mindestens 100 bar vorgenommen wird.

3. Verfahren nach Anspruch 1, **dadurch gekennzeichnet, daß** die Freisetzung unter einem Druck von mindestens 300 bar vorgenommen wird.

4. Verfahren nach Anspruch 1, **dadurch gekennzeichnet, daß** die Freisetzung unter einem Druck von mindestens 600 bar vorgenommen wird.

5. Verfahren nach Anspruch 1, **dadurch gekennzeichnet, daß** die Freisetzung unter einem Druck von mindestens 700 bar vorgenommen wird.

6. Verfahren nach einem der Ansprüche 1 bis 5, **dadurch gekennzeichnet, daß** als flüssiges Medium organische Verbindungen, insbesondere Perhydrocarbazole, Perhydrofluorene, 2-Methylthiophene oder Toluol (entladene Formen) bzw. deren aushydrierte, mit Wasserstoff beladene Formen, wie Carbazole, Fluorene, Pentan-1-thiole oder Methylcyclohexan, eingesetzt werden.

7. Verfahren nach einem der Ansprüche 1 bis 5, **dadurch gekennzeichnet, daß** als flüssiges Medium Aminoborane eingesetzt werden.

8. Verfahren nach einem der Ansprüche 1 bis 5, **dadurch gekennzeichnet, daß** als flüssiges Medium Alkohole eingesetzt werden.

9. Verfahren nach einem der Ansprüche 1 bis 5, **dadurch gekennzeichnet, daß** als flüssiges Medium Carbonsäuren eingesetzt werden.

10. Verfahren nach einem der Ansprüche 1 bis 5, **dadurch gekennzeichnet, daß** als flüssiges Medium Lösungen von Metall-/Halbmetallhydriden oder Metall-/Halbmetallhydridsalzen eingesetzt werden.

11. Verfahren nach einem der Ansprüche 6 bis 10, **dadurch gekennzeichnet, dass** die in den Ansprüchen genannten Substanzen in ionischen Flüssigkeiten gelöst sind.

12. Verfahren nach einem der Ansprüche 1 bis 5, **dadurch gekennzeichnet, daß** als flüssiges Medium eine ionische Flüssigkeit oder eine Lösung von ionischen Flüssigkeiten eingesetzt wird.

13. Verfahren nach Anspruch 12, **dadurch gekennzeichnet, daß** das Anion der ionischen Flüssigkeit ein Metallhydrid oder ein Halbmetallhydrid ist.

14. Verfahren nach Anspruch 12, **dadurch gekennzeichnet dass** das Metall-/Halbmetallhydrid ein Borhydrid (BH₄⁻) oder oder ein Triborhydrid (B₃H₈⁻), ein Aluminiumhydrid (AlH₄⁻) oder Alumoborhydrid Al(BH₄)₄ ist. .

15. Verfahren nach einem der Ansprüche 1 bis 14, **dadurch gekennzeichnet, dass** die Freisetzung des Wasserstoffs unter Anwendung eines Katalysator erfolgt.

16. Verfahren nach Anspruch 15, **dadurch gekennzeichnet, dass** der Katalysator aus der Gruppe der Metall- oder Edelmetallkatalysatoren stammt.

17. Verfahren nach einem der Ansprüche 1 bis 16, **dadurch gekennzeichnet, dass** das flüssige Medium, in dem der Wasserstoff chemisch oder physikalisch gebunden ist, mit Hilfe einer Druckerhöhungseinrichtung auf einen Druck über 25 bar gebracht wird, danach der Wasserstoff bei einem Druck über 25 bar aus dem flüssige Medium freigesetzt wird,und der so freigesetzte Wasserstoff einem Speicher oder einer Anwendung zugeführt wird.

18. Verfahren nach Anspruch 17, **dadurch gekennzeichnet, dass** die Druckerhöhungseinrichtung eine Pumpe ist.
